# EUROPÄISCHE PATENTSCHRIFT

(11) **EP 4 077 095 B1**
(45) Veröffentlichungstag und Bekanntmachung des Hinweises auf die Patenterteilung: **17.07.2024**
(21) Anmeldenummer: 21721868.4
(22) Anmeldetag: 16.04.2021
(51) Int. Cl.: B61K 9/08, B61D 17/06, G01D 11/24, G01D 11/26

(54) **SCHIENENFAHRZEUG MIT EINEM SENSORMODUL**
RAIL VEHICLE COMPRISING A SENSOR MODULE
VÉHICULE FERROVIAIRE COMPRENANT UN MODULE DE DÉTECTION

(30) Priorität: 26.05.2020 DE 102020206549
(43) Veröffentlichungstag der Anmeldung: 26.10.2022
(73) Patentinhaber: Siemens Mobility GmbH, 81739 München (DE)
(72) Erfinder: FRANCKE, Jürgen, 12524 Berlin (DE); WAECHTER, Thomas, 14621 Schönwalde-Glien OT Siedlung (DE); GRÄFING, Jan, 12359 Berlin (DE); KRUTZ, Andreas, 13055 Berlin (DE)
(74) Vertreter: Siemens Patent Attorneys
(86) Internationale Anmeldenummer: PCT/EP2021/059845
(87) Internationale Veröffentlichungsnummer: WO 2021/239325

(56) Entgegenhaltungen:
- AU-A1- 2017 232 220
- CN-A- 108 974 044
- DE-A1- 102014 222 900
- DE-U1- 202018 103 489
- US-A1- 2018 037 267
- US-A1- 2020 132 521

## Beschreibung

Für den teilautomatisierten und autonomen Betrieb von Schienenfahrzeugen ist eine sensorielle Umfelderkennung zur Unterstützung des Fahrzeugführers oder zur autonomen Umsetzung der Fahraufgabe essenziell. Zur fahrzeugseitigen Erkennung von Objekten, Hindernissen oder Signalen auf dem Fahrweg des Schienenfahrzeugs sowie deren Lage und/oder Bewegungszustand relativ zum Schienenfahrzeug sind Umfeldsensoren unterschiedlicher Erfassungsmodi und Reichweiten bekannt, die Umfelddaten eines in ihrem Sichtfeld wahrnehmbaren Umfeldausschnitts erfassen. Bei Verwendung mehrerer Umfeldsensoren werden deren erfasste Umfelddaten fusioniert und daraus ein qualitativ hochwertiges Umgebungsbild gewonnen.

Aus AU 2017232220 A1 sowie aus CN 108974044 A ist ein System zur Vermessung von Eisenbahnanlagen bekannt, welches beispielsweise auf einem Inspektionszug installiert ist. Das Vermessungssystem umfasst ein Hauptgehäuse mit Fensteröffnungen, in welchem Sensoren zur Objektinspektion hinter jeweils einem Glasfenster untergebracht sind. Mittig ist eine nach vorne gerichtete Kamera mit Weitwinkelobjektiv und einem Wärmebildsensor angeordnet, dessen Sichtfeld das Gleis vor dem Inspektionsfahrzeug erfasst. Um jeweils 45° nach außen gerichtet sind zwei flankierende Abbildungssensoren zum Abbilden von Anlagenobjekten seitlich des Gleises. Zur Erfassung von Überkopfobjekten ist ein Abtast- oder Wärmebildsensor angeordnet, dessen Sichtfeld nach oben gerichtet ist. Zwei Zeilenkameras sind nach unten gerichtet, um den Bereich von Nachbargleisen abzutasten. Mittig nach unten gerichtet ist eine Lidarsensor zum Abtasten des vom Inspektionsfahrzeug befahrenen Gleises. Um freie Sichtfelder für alle Sensoren bereitzustellen, ist das Hauptgehäuse mit seiner Rückwand an die Vorderwand des Inspektionszuges befestigt.

Mit zunehmenden Geschwindigkeiten, die im Betrieb mit dem Schienenfahrzeug gefahren werden, nehmen die Anforderungen an die Integration von Umfeldsensoren in das Schienenfahrzeug hinsichtlich der Funktionsfähigkeit der Sensorik aber auch hinsichtlich betreiberseitiger Zulassungsvoraussetzungen, insbesondere ab Geschwindigkeiten von 200 km/h, zu.

Der Erfindung liegt daher die Aufgabe zugrunde, die Integration von Umfeldsensoren in Schienenfahrzeuge, insbesondere für den Hochgeschwindigkeitsbetrieb, zu optimieren.

Die Aufgabe wird erfindungsgemäß gelöst durch ein gattungsgemäßes Schienenfahrzeug mit den im kennzeichnenden Teil des Anspruches 1 angegebenen Merkmalen. Demnach umfasst das Schienenfahrzeug ein Sensormodul, welches ein kastenförmiges Modulgehäuse mit einer eine Frontöffnung aufweisenden Gehäusewand umfasst. Ferner umfasst es ein oder mehrere im Modulgehäuse angeordnete Umfeldsensoren zur Erfassung von durch die Frontöffnung wahrnehmbaren Umfelddaten. Des Weiteren umfasst das Sensormodul eine oder mehrere die Frontöffnung verschließende Frontfenster mit jeweils einer Fensterscheibe. Das durch Gehäusewand und Frontfenster geschlossene Modulgehäuse schützt darin angeordnete Umfeldsensoren beim Transport, bei der Montage und im Betrieb des Schienenfahrzeugs insbesondere vor äußeren mechanischen Krafteinwirkungen. Im Modulgehäuse können beispielsweise unterschiedliche Umfeldsensoren an speziellen Sensoraufnahmen befestigt sein, die wiederum über eine einheitliche Standardschnittstelle mit der Unter- oder Rückseite der Gehäusewand lösbar verbunden werden können. So lassen sich mit einem einheitlichen Modulgehäuse Sensormodule mit unterschiedlichen Sensorkonfigurationen einfach und flexibel auswählen. Durch die Frontfenster können die Umfeldsensoren einen in ihrem Sichtbereich liegenden Umfeldausschnitt erfassen und sind nach außen hin geschützt. Die Baugröße des Modulgehäuses ist so groß gewählt, dass die erforderlichen Umfeldsensoren untergebracht werden können, aber so klein, dass der beanspruchte Bauraum und der Ausschnitt in der Außenhaut des Schienenfahrzeugs möglichst gering sind. Erfindungsgemäß sind das oder die Frontfenster des Sensormoduls als Teil einer Außenhaut des Schienenfahrzeugs ausgebildet und setzten deren Außenkontur aerodynamisch fort. Das oder die Frontfenster können flach, gerundet oder gewölbt ausgebildet und gegenüber dem Boden der Gehäusewand unter einem spitzen Winkel, in Fahrtrichtung nach hinten, angestellt sein. Mehrere solcher Frontfenster können in einer gemeinsamen Ebene liegend angeordnet sein. Sie können aber auch einen stumpfen Winkel einschließend leichte Stoßkanten untereinander und mit der sich an das Frontfenster anschließenden Außenhaut des Schienenfahrzeugs bilden. Vorzugsweise bilden die Front-fenster in sich und mit der anschließenden Außenhaut eine aerodynamisch günstige Form, die wenig Anlass zu Wirbelabrissen des Fahrtwindes bietet. Mit Vorteil kann das erfindungsgemäße Sensormodul in Zügen oder Lokomotiven, die Geschwindigkeiten bis 200 km/h und mehr fahren, integriert sein.

In einer vorteilhaften Ausführungsform des erfindungsgemäßen Schienenfahrzeugs sind der eine oder die mehreren Umfeldsensoren aus der Gruppe, bestehend aus Laserscanner, Lidarsensor, Radarsensor, Videokamera und dergleichen, ausgewählt. Indem Umfeldsensoren mit unterschiedlichen Erfassungsmodi und unterschiedlichen Reichweiten kombiniert werden, können Umfelddaten unterschiedlicher Art und aus einem großen Umgebungsbereich erfasst werden.

In einer weiteren vorteilhaften Ausführungsform des erfindungsgemäßen Schienenfahrzeugs sind das oder die Frontfenster als Teil einer Außenhaut des Schienenfahrzeugs ausgebildet und setzten deren Außenkontur aerodynamisch fort. Das oder die Frontfenster können flach, gerundet oder gewölbt ausgebildet und gegenüber dem Boden der Gehäusewand unter einem spitzen Winkel, in Fahrtrichtung nach hinten, angestellt sein. Mehrere solcher Frontfenster können in einer gemeinsamen Ebene liegend angeordnet sein. Sie können aber auch einen stumpfen Winkel einschließend leichte Stoßkanten untereinander und mit der sich an das Frontfenster anschließenden Außenhaut des Schienenfahrzeugs bilden. Vorzugsweise bilden die Frontfenster in sich und mit der anschließenden Außenhaut eine aerodynamisch günstige Form, die wenig Anlass zu Wirbelabrissen des Fahrtwindes bietet.

In einer weiteren vorteilhaften Ausführungsform des erfindungsgemäßen Schienenfahrzeugs weisen das oder die Frontfenster jeweils einen die Fensterscheibe einfassenden Fensterrahmen auf, der mit der Gehäusewand lösbar verbunden ist. Hierdurch ist es möglich, das Frontfenster oder einzelne eines mehrteiligen Frontfensters bei Beschädigung oder aus anderen, weiter unten beschriebenen Gründen auszutauschen, ohne dass das Sensormodul als Ganzes ausgetauscht werden muss. Dies erhöht die Wartungsfreundlichkeit und schafft Flexibilität für unterschiedliche Sensorkonfigurationen.

In einer weiteren vorteilhaften Ausführungsform des erfindungsgemäßen Schienenfahrzeugs sind das oder die Frontfenster aus einem Frontfenstersatz ausgewählt, welcher Frontfenster mit unterschiedlichen, für die Durchlässigkeit der jeweils von einem Umfeldsensor verwendeten Strahlung optimierten Fensterscheiben aufweist. Werden als Umfeldsensoren beispielsweise eine Videokamera, ein Radarsensor und ein Lidarsystem kombiniert, so verwenden zwar alle Umfeldsensoren elektromagnetische Strahlung, allerdings mit unterschiedlichen Wellenlängen bzw. Wellenlängenbereichen. Die Wechselwirkung zwischen Strahlung und Frontscheibe hängt dabei von der Wellenlänge der verwendeten Strahlung und von dem verwendeten Material der Frontscheibe ab. Entsprechend kann für jede Art von Umfeldsensor eine hinsichtlich der Signaldämpfung optimierte Frontscheibe zur Verfügung gestellt werden. Mittels des so bereitgestellten Frontfenstersatz kann ein entsprechend der Signaldämpfung optimiertes Sensormodul zusammengestellt werden.

In einer weiteren vorteilhaften Ausführungsform des erfindungsgemäßen Schienenfahrzeugs das oder die Frontfenster aus einem Frontfenstersatz ausgewählt sind, welcher Frontfenster mit unterschiedlichen, für die Aerodynamik der jeweiligen Außenkontur des Schienenfahrzeugs optimierten Fensterscheiben aufweist. Mit einem solchen Frontfenstersatz werden Front-fenster mit unterschiedlichen Formen bereitgestellt, die den unterschiedlichen Außenkonturen von Schienenfahrzeugen Rechnung tragen. So kann die Außenkontur des Schienenfahrzeugs am Einbauort eben oder mehr oder weniger stark gewölbt ausgebildet sein, wie es der Formenschatz an Lokomotivfronten und Zugnasen verlangt. Durch ebene und mehr oder weniger stark gewölbte Frontfenster kann ein Frontfenstersatz bereitgestellt werden, der die Außenkontur des Schienenfahrzeugs bei Einbau eines erfindungsgemäßen Sensormoduls strömungstechnisch optimiert fortsetzt.

In einer weiteren vorteilhaften Ausführungsform des erfindungsgemäßen Schienenfahrzeugs sind das Modulgehäuse und die Frontfenster hinsichtlich Festigkeit und Dichtigkeit für den Hochgeschwindigkeitsbetrieb des Schienenfahrzeugs ausgebildet. Material und Stärke von Gehäusewand und Fensterscheiben sowie die Verbindungstechniken sind so gewählt, dass es den im Betrieb bei 200 km/h oder mehr auftretenden Schwingungen und Schlägen standhält. Die Verbindungen zwischen Frontfenster und Modulgehäuse und die Leitungsdurchführungen für Energieversorgungs- und Signalleitungen in der Gehäusewand sind derart dicht ausgelegt, dass Feuchtigkeit auch im Hochgeschwindigkeitsbetrieb des Schienenfahrzeugs nicht in das Modulgehäuse eindringen kann.

In einer weiteren vorteilhaften Ausführungsform des erfindungsgemäßen Schienenfahrzeugs weisen die Fensterscheiben an ihren Außenseiten eine wasser- und/oder schmutzabweisende Beschichtung auf. Hierdurch werden Ablagerungen von Schmutzpartikeln, Wassertropfen oder sonstigem Belag auf den Frontscheiben vermieden, so dass hierdurch bedingte Dämpfungen oder Verfälschungen des Sensorsignals möglichst geringgehalten werden. Dadurch ist eine hohe Verfügbarkeit des erfindungsgemäßen Sensormoduls im Betrieb des Schienenfahrzeugs gewährleistet.

In einer vorteilhaften Ausführungsform ist im Bugbereich des erfindungsgemäßen Schienenfahrzeugs hinter einer Öffnung in dessen Außenhaut eine Modulhalterung derart angeordnet, dass das Sensormodul zur Aufnahme und lösbaren Befestigung in der Modulhalterung durch die Öffnung hindurchführbar ist. Die Modulhalterung kann einen Rahmen aus Profilschienen aufweisen, dessen Seitenflächen offen oder durch Halterungswände geschlossen gestaltet werden können. Die Modulhalterung bildet eine Aufnahme für ein Sensormodul, welches durch einen beispielsweise rechteckförmigen Ausschnitt in der Außenhaut des Schienenfahrzeugs von außen in die Aufnahme eingeschoben werden kann. Im eingeschobenen Zustand wird das Sensormodul in der Modulhalterung befestigt, wobei Frontfenster und sich anschließende Außenhaut einen glatten, strömungstechnisch günstigen Übergang bilden.

Weitere Eigenschaften und Vorteile ergeben sich aus nachfolgender Beschreibung eines Ausführungsbeispiels der Erfindung anhand der Zeichnungen, in deren
- FIG 1: ein Sensormodul für ein erfindungsgemäßes Schienenfahrzeug in perspektivischer Darstellung und
- FIG 2: ein Schienenfahrzeug mit einem im Bugbereich integrierten Sensormodul gemäß FIG 1
schematisch veranschaulichen.

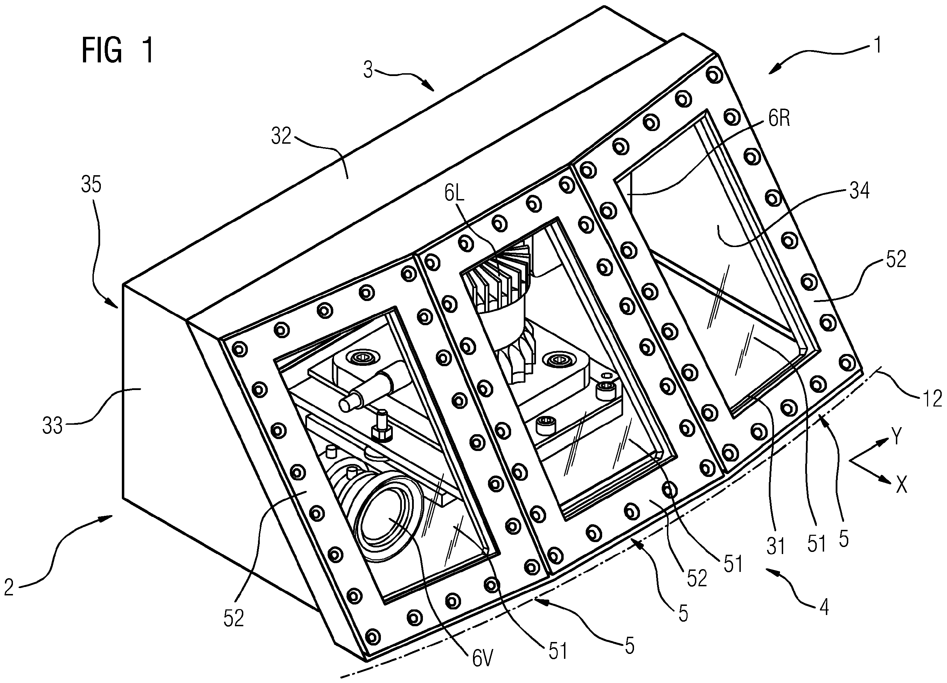

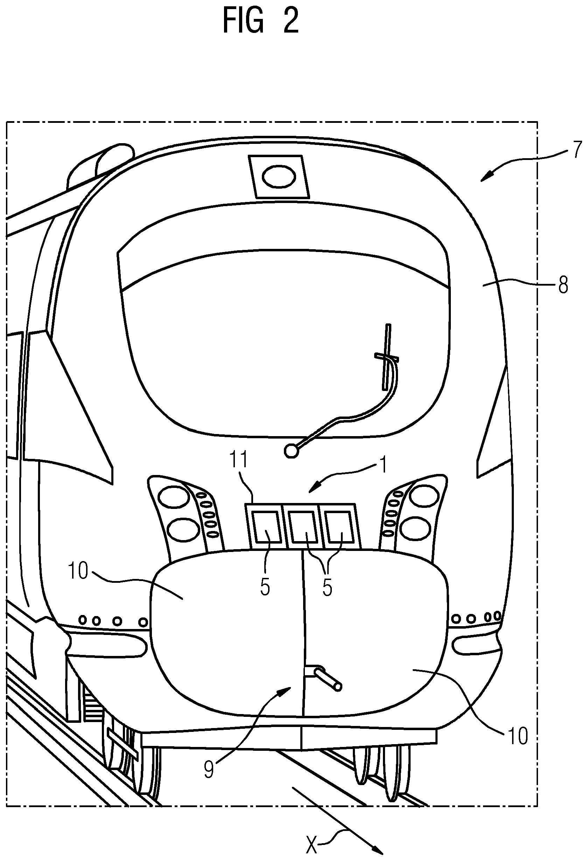

Gemäß FIG 1 umfasst ein Sensormodul 1 für ein erfindungsgemä-ßes Schienenfahrzeug ein kastenförmiges Modulgehäuse 2, dessen Gehäusewand 3 ein rechteckförmiges Bodenteil 31, ein demgegenüber schmaleres rechteckförmiges Deckenteil 32, zwei trapezförmige Seitenteile 33 und 34, sowie ein rechteckförmiges Rückenteil 35 aufweist. Eine rechteckförmige Frontöffnung 4 in der Gehäusewand 3 ist durch drei Frontfenster 5 verschlossen. Innerhalb des Modulgehäuses 2 sind Umfeldsensoren - in ihrer Gesamtheit mit 6 bezeichnet - angeordnet, die Erfassung von Umfelddaten eines durch die Frontöffnung 4 wahrnehmbaren Umgebungsausschnitts ausgebildet sind. Als Umfeldsensoren 6 sind im dargestellten Ausführungsbeispiel eine Videokamera 6V, ein Lidarsystem 6L und ein Radarsensor 6R entgegen die Fahrtrichtung X des Schienenfahrzeugs 7 (vgl. FIG 2) blickend von links nach rechts angeordnet. Das Modulgehäuse 2 weist eine Größe auf, dass auch andere Umfeldsensoren 6, beispielsweise eine Infrarotkamera oder ein Laserscanner darin angeordnet werden können, je nachdem, welche Umfelddaten erfasst werden sollen. Umfeldsensoren 6 mit unterschiedlichen Erfassungsmodi und unterschiedlichen Reichweiten ermöglichen die Erfassung von Umfelddaten unterschiedlicher Art aus einem großen Umgebungsbereich, beispielsweise Umgebungsbilddaten einschließlich Abstands- und Lagedaten von Objekten und Hindernissen. Das durch Gehäusewand 3 und Frontfenster 5 geschlossene Modulgehäuse 2 schützt die darin angeordneten Umfeldsensoren 6 beim Transport, bei der Montage und im Betrieb des Schienenfahrzeugs 7 insbesondere vor äußeren mechanischen Krafteinwirkungen.

Gemäß FIG 2 ist das Sensormodul 1 seitenmittig im Bugbereich eines als Hochgeschwindigkeitszug ausgebildeten Schienenfahrzeugs 7 integriert. Ein Kopfteil 8 des Schienenfahrzeugs 7 verjüngt sich stromlinienförmig bis zur Zugnase 9, wo eine zweiteilige Bugklappe 10 eine in FIG 2 nicht sichtbare Kupplung verdeckt. Die Außenhaut des Kopfteils 8 weist oberhalb der Bugklappe 10 einen rechteckförmigen Ausschnitt 11 auf, hinter welchem im Innenraum des Kopfteils 8 eine nicht dargestellte Modulhalterung angeordnet ist. Das Sensormodul 1 ist von außen durch den Ausschnitt 11 in die Modulhalterung einführbar und zu dessen Entnahme wieder ausführbar. Das von der Modulhalterung aufgenommene Sensormodul 1 ist dort lösbar befestigt. Die Modulhalterung kann entsprechend dem Modulgehäuse 2 als kastenförmiger Schacht ausgebildet sein. Die Frontfenster 5 setzten die Außenkontur der Außenhaut im Bereich des Ausschnitts 11 aerodynamisch fort und bilden somit einen Teil der Außenhaut, indem sie glatte, strömungstechnisch günstige Übergang bilden. Die Frontfenster 5 sind im dargestellten Ausführungsbeispiel flach ausgebildet und gegenüber dem Bodenteil 31 der Gehäusewand 3 unter einem spitzen Winkel, in Fahrtrichtung X nach hinten, angestellt. Um die runde Außenkontur 12 in Querrichtung Y nachzubilden, bilden die beiden äußeren Frontfenster 5 gegenüber dem mittleren Frontfenster 5 einen stumpfen Winkel.

Jedes der Frontfenster 5 weist einen eine Fensterscheibe 51 einfassenden Fensterrahmen 52 auf, der mit der Gehäusewand 3 lösbar verbunden ist. Dies ermöglicht eine Austauschbarkeit einzelner Frontfenster 5 auf einfache Weise. So können beispielsweise Frontfenster 5 mit unterschiedlichen, für die Durchlässigkeit der jeweils von einem Umfeldsensor 6 verwendeten Strahlung optimierten Fensterscheiben 51 verwendet werden, um die Signaldämpfung bei Durchtritt von Licht oder Radiowellen gering zu halten. Ebenso können Frontfenster 5 mit unterschiedlichen, an die jeweilige Außenkontur des Schienenfahrzeugs 7 angepassten Fensterscheiben 51 verwendet werden, um die Aerodynamik des Schienenfahrzeugs 7 zu optimierten. Um Ablagerungen von Schmutzpartikeln, Wassertropfen oder sonstigem Belag auf den Frontscheiben 51 zu vermeiden, können diese auf ihren Außenseiten eine wasser- und/oder schmutzabweisende Beschichtung aufweisen.

Das durch die Frontfenster 5 geschlossene Modulgehäuse 2 erfüllt bahnspezifische Anforderungen hinsichtlich Festigkeit und Dichtigkeit für den Hochgeschwindigkeitsbetrieb und ermöglicht die Funktion der Umfeldsensorik 6. Der Konstruktionsaufwand für das erfindungsgemäße Sensormodul 1 fällt einmalig an, welches dann vielfältig in eine Reihe von Schienenfahrzeugen 7 integriert werden kann und je nach Anforderungen verschiedene Umfeldsensoren 6 in unterschiedlichen Konfigurationen aufnehmen kann. Durch die Bauweise mit Modulgehäuse 2 und Modulhalterung kann das Schienenfahrzeug 7 vom Betreiber modifiziert werden, während das Sensormodul 1 eigenständig und nicht Eigentum des Fahrzeugbetreibers sein muss. Die Sensormodul 1 ist so konstruiert, dass es den aktuellen Bahnnormen genügt. Die Verkabelung und sämtliche zum Fahrassistenzsystem gehörenden Teile sind ebenfalls den Bahnnormen konform ausgeführt. Das Schienenfahrzeug 7 ist in seinen Leistungsdaten durch den Einbau des Sensormoduls 1 nicht eingeschränkt, insbesondere die bauartbedingte Höchstgeschwindigkeit betreffend.

## Patentansprüche

1. Schienenfahrzeug (7) mit einem Sensormodul (1),
- wobei das Sensormodul (1) umfasst:
- ein kastenförmiges Modulgehäuse (2) mit einer eine Frontöffnung (4) aufweisenden Gehäusewand (3),
- ein oder mehrere im Modulgehäuse (2) angeordnete Umfeldsensoren (6) zur Erfassung von durch die Frontöffnung (4) wahrnehmbaren Umfelddaten und
- eine oder mehrere die Frontöffnung (4) verschließende Frontfenster (5) mit jeweils einer Fensterscheibe (51), **dadurch gekennzeichnet,**
- **dass** das oder die Frontfenster (5) als Teil einer Außenhaut des Schienenfahrzeugs (7) ausgebildet sind und deren Außenkontur (12) aerodynamisch fortsetzen.

2. Schienenfahrzeug (7) nach Anspruch 1,
- wobei der eine oder die mehreren Umfeldsensoren (6) aus der Gruppe, bestehend aus Videokamera (6V), Lidarsystem (6L), Radarsensor (6R), ausgewählt sind.

3. Schienenfahrzeug (7) nach einem der vorangehenden Ansprüche,
- wobei das oder die Frontfenster (5) jeweils einen die Fensterscheibe (51) einfassenden Fensterrahmen (52) aufweisen, der mit der Gehäusewand (3) lösbar verbunden ist.

4. Schienenfahrzeug (7) nach Anspruch 3,
- wobei das oder die Frontfenster (5) aus einem Frontfenstersatz ausgewählt sind, welcher Frontfenster (5) mit unterschiedlichen, für die Durchlässigkeit der jeweils von einem Umfeldsensor (6) verwendeten Strahlung optimierten Fensterscheiben (51) aufweist.

5. Schienenfahrzeug (7) nach Anspruch 3 oder 4,
- wobei das oder die Frontfenster (5) aus einem Frontfenstersatz ausgewählt sind, welcher Frontfenster (5) mit unterschiedlichen, für die Aerodynamik der jeweiligen Außenkontur des Schienenfahrzeugs (7) optimierten Fensterscheiben (51) aufweist.

6. Schienenfahrzeug (7) nach einem der vorangehenden Ansprüche,
- wobei das Modulgehäuse (2) und die Frontfenster (5) hinsichtlich Festigkeit und Dichtigkeit für den Hochgeschwindigkeitsbetrieb des Schienenfahrzeugs (7) ausgebildet sind.

7. Schienenfahrzeug (7) nach einem der vorangehenden Ansprüche,
- wobei die Fensterscheiben (51) an ihren Außenseiten eine wasser- und/oder schmutzabweisende Beschichtung aufweisen.

8. Schienenfahrzeug (7) nach einem der vorangehenden Ansprüche,
- wobei im Bugbereich des Schienenfahrzeugs (7) hinter einem Ausschnitt (11) in dessen Außenhaut eine Modulhalterung derart angeordnet ist, dass das Sensormodul (1) zur Aufnahme und lösbaren Befestigung in der Modulhalterung durch den Ausschnitt (11) hindurchführbar ist.

## Claims

1. Rail vehicle (7) with a sensor module (1),
- wherein the sensor module (1) comprises:
- a box-like module housing (2) with a housing wall (3) having a front opening (4),
- one or more environment sensors (6) arranged in the module housing (2) for acquiring environment data that can be perceived through the front opening (4) and
- one or more front windows (5), each with a window pane (51), which close the front opening (4),
**characterised in that**
- the front window or front windows (5) are embodied as part of an outer skin of the rail vehicle (7) and continue the outer contour (12) thereof aerodynamically.

2. Rail vehicle (7) according to claim 1,
- wherein the one or more environment sensors (6) are selected from the group consisting of video cameras (6V), lidar systems (6L), radar sensors (6R).

3. Rail vehicle (7) according to one of the preceding claims,
- wherein the front window or front windows (5) each have a window frame (52), which encloses the window pane (51) and is detachably connected to the housing wall (3).

4. Rail vehicle (7) according to claim 3,
- wherein the front window or front windows (5) are selected from a front window set which has front windows (5) with different window panes (51) optimised for the transmission of the radiation used in each case by an environment sensor (6).

5. Rail vehicle (7) according to claim 3 or 4,
- wherein the front window or front windows (5) are selected from a front window set which has front windows (5) with different window panes (51) optimised for the aerodynamics of the respective outer contour of the rail vehicle (7).

6. Rail vehicle (7) according to one of the preceding claims,
- wherein the module housing (2) and the front windows (5) are embodied in terms of strength and tightness for highspeed operation of the rail vehicle (7).

7. Rail vehicle (7) according to one of the preceding claims,
- wherein the window panes (51) have a water- and/or dirt-repellent coating on their outer sides.

8. Rail vehicle (7) according to one of the preceding claims,
- wherein a module holder is arranged in the nose region of the rail vehicle (7) behind a cutout (11) in its outer skin such that the sensor module (1) can be guided through the cutout (11) in order to be received and detachably fastened in the module holder.

## Revendications

1. Véhicule (7) ferroviaire ayant un module (1) de détection,
- dans lequel le module (1) de détection comprend :
- un boîtier (2) de module en forme de caisson ayant une paroi (3) de boîtier comportant une ouverture (4) avant,
- un ou plusieurs capteurs (6) du champ ambiant montés dans la boîtier (2) du module pour la détection de données du champ ambiant perceptibles par l'ouverture (4) avant, et
- une ou plusieurs fenêtres (5) avant fermant l'ouverture (4) avant et ayant respectivement une vitre (51) de fenêtre,
**caractérisé**
- **en ce que** la ou les fenêtres (5) avant sont constituées comme parties d'un peau extérieure du véhicule (7) ferroviaire et en continuent aérodynamiquement le contour (12) extérieur.

2. Véhicule (7) ferroviaire suivant la revendication 1,
- dans lequel le un ou les plusieurs capteurs (6) du champ ambiant sont choisis dans le groupe constitués d'une caméra (6V) vidéo, d'un système (6L) lidar, d'un capteur (6R) radar.

3. Véhicule (7) ferroviaire suivant l'une des revendications précédentes,
- dans lequel la ou les fenêtres (5) avant ont chacune un cadre (52) de fenêtre, qui enchâsse la vitre (51) de fenêtre et qui est assemblé de manière amovible à la paroi (3) du boîtier.

4. Véhicule (7) ferroviaire suivant la revendication 3,
- dans lequel la ou les fenêtres (5) avant sont choisies parmi un ensemble de fenêtres avant, lequel a des fenêtres (5) avant ayant des vitres (51) de fenêtre différentes optimisées pour la perméabilité du rayonnement utilisé respectivement par un capteur (6) du champ ambiant.

5. Véhicule (7) ferroviaire suivant la revendication 3 ou 4,
- dans lequel la ou les fenêtres (5) avant sont choisies parmi un ensemble de fenêtres avant, qui a des fenêtres (5) ayant des vitres (51) de fenêtres optimisées pour l'aérodynamique du contour extérieur respectif du véhicule (7) ferroviaire.

6. Véhicule (7) ferroviaire suivant l'une des revendications précédentes,
- dans lequel le boîtier (2) du module et les fenêtres (5) avant sont constituées en ce qui concerne la solidité et l'étanchéité pour le fonctionnement à grande vitesse du véhicule (7) ferroviaire.

7. Véhicule (7) ferroviaire suivant l'une des revendications précédentes,
- dans lequel les vitres (51) de fenêtre ont, sur leur face extérieure, un revêtement repoussant l'eau et/ou les salissures.

8. Véhicule (7) ferroviaire suivant l'une des revendications précédentes,
- dans lequel, dans la partie avant du véhicule (7) ferroviaire, est disposé, derrière une découpe (11) dans sa peau extérieure, une fixation de module, de manière à ce que le module (1) de capteur puisse, pour la réception et la fixation de manière amovible dans la fixation du module, passer à travers dans la découpe (11).
